# EUROPEAN PATENT APPLICATION

(11) **EP 4 657 138 A1**
(43) Date of publication of application: **03.12.2025**
(21) Application number: 24178989.0
(22) Date of filing: 30.05.2024
(51) Int. Cl.: G02B 27/01, G02B 27/00

(54) **IMAGE PROJECTION SYSTEM AND MONOCULAR GLASSES USING THE SAME**

(71) Applicant: VoxelSensors SRL, 1000 Brussels (BE)
(72) Inventor: Greenberg, Boris, 6579402 Tel Aviv Jaffa (IL)

(57) **Abstract**

The present invention relates to a projection system for use in direct projection of images onto user's eye, the projection system comprising: a scanner operable for scanning a predetermined field of view with an image encoded light beam, an exit pupil of the scanner defining an exit pupil of the projection system; and an image projector configured to define an effective eyebox of predetermined dimensions, the image projector being configured and operable to transform the exit pupil of the scanner into an array of N said exit pupils being simultaneously projected on a user-selected partial eyebox being a region of the effective eyebox.

## Description

### TECHNOLOGICAL FIELD

The present invention is in the field of virtual /augmented reality techniques, and relates to an image projection system for direct projection of images onto user eyes, and is particularly useful with monocular smart glasses.

### BACKGROUND

Augmented reality systems, that may be incorporated in / used with smart glasses and head-up displays (HUDs) have been seriously developed during the last years and found their use in various applications, including gaming as well as medical applications.

Various techniques have been developed attempting to simplify such systems while keeping the high-quality performance. These techniques are aimed at various problems associated with a need to create an optimized image and a wide field of view (FOV), while the optics commonly used in such systems (mirrors, lenses, and prisms) unavoidably increase the total system volume, as well as weight. These parameters are critical for near-to-eyes devices, such as smart glasses.

### GENERAL DESCRIPTION

There is a need in the art for a novel approach for configuring monocular smart glasses, which are suitable to be worn by individuals of different face shapes / eye distances / eye vision capabilities, and providing desirably high performance (high brightness and image resolution) while having high power efficiency.

The present invention provides monocular glasses meeting the above requirements, which also can be made of a low weight (up to 70gm in a sleek form factor) and may be made with a short eye relief (about 20mm), thus being comfortable in use.

The present invention is based on the inventor's understanding of the following: Generally, small form factor glasses unavoidably limit the field of view of the image being projected to e.g. about 20 diagonal degrees. This relatively small field view, however, needs to provide high quality image presentation.

On the one hand, in order to provide the desirably high quality image, i.e., high brightness (up to 10,000 nits) and resolution (3 arcmin) of the image being presented to the eye, an exit pupil of an image projection system is to be desirably small (not larger and preferably slightly smaller) than a typical eye pupil size. Moreover, it should be kept in mind that when viewing a high-brightness image, the eye pupil size is always being reduced (i.e. about 1.5-2 mm). On the other hand, for monocular glasses to be suitable for various users, the eyebox defined by the image projection system is to be desirably large, i.e. at least 10x10mm.

In view of the above requirements, the image projection system is to be configured with a desirably small exit pupil (e.g. 1.5 mm), which defines a minimal beam diameter at an exit pupil to provide the required resolution (about 3 arcmin), while presenting the image within the 10x10 mm eyebox (to avoid escape of an image part from the eye pupil vision).

The present invention solves the above problems by configuring the image projection system for transforming the exit pupil of the scanner onto an effective eyebox predefined by the projection system in a manner enabling simultaneous appearance of an array of multiple exit pupils (e.g., matrix type exit pupil arrangement) while in a fully static state of the optical scheme (i.e. without any movements / beam deflections). Moreover, the projection system is preferably configured to enable adjustment of the location of such array/matrix of the exit pupils (at times referred to herein as "partial eyebox") within one of multiple optical windows / regions of the effective eyebox. This enables the proper/optimal user-specific optical window to be selected once, such that the optimal exit pupil matrix (partial eyebox) is then maintained for image projection during imaging session(s) for said user.

In other words, the projection system is configured to define an effective eyebox (being actually a cross-section of the field of view) of a desired relatively large size (e.g. 10×10mm) including an array (preferably a 2D array/matrix") of spaced apart optical windows (e.g. 3x3 matrix), enabling selection of the optical window to be used for image projection thereto. Such optical windows are at times referred to herein as "partial eyeboxes". Further, the projection system is configured to provide a predetermined array/matrix of the exit pupils (2x2 matrix), enabling to locate the exit pupil matrix within a selected optical window / partial eyebox of the effective eyebox.

The selection of the one of the partial eyeboxes as the location/region of the appearance of exit pupil matrix can be done either automatically by an eye position tracker or manually as it is constant per user. The optical windows / partial eyeboxes are preferably arranged within the effective matrix with sufficient overlap between them to cover population variance.

Thus, according to one broad aspect of the invention, it provides a projection system for use in direct projection of images onto user's eye, the projection system comprising:
a scanner operable for scanning a predetermined field of view with an image encoded light beam; and
an image projector configured to define an effective eyebox of predetermined dimensions, the image projector being configured and operable to transform the exit pupil of the scanner into an array of N said exit pupils being simultaneously projected on a user-selected partial eyebox being a region of the effective eyebox.

Preferably, the image projector is configured to define the effective eyebox configured to define a predetermined array of optical windows, each configured to operate as the user-selected partial eyebox for simultaneously presenting thereon said array of N exit pupils.

In some embodiments, the scanner comprises successively arranged first and second scan units and light directing optics between them, wherein, the first scan unit is located in a non-collimated space of the light directing optics.

The image projector preferably includes a partial eyebox selector configured for displacing a path of the exit pupil projection towards different regions of the effective eyebox, to thereby enable to identify the user-selected region to be used in one or more imaging sessions.

The image projector comprises a pupil multiplicator system, which preferably comprises at least first and second multiplicators configured for successively multiplying (replicating) the exit pupil along at least first and second axes to thereby create an *N×M* matrix of the exit pupils to be projected onto the selected partial eyebox.

In some embodiments, each of said at least first and second multiplicators is configured for polarization-selective splitting and combining of light beams to thereby produce multiple light components, each corresponding to replica/duplicate of said exit pupil.

The pupil multiplicator system preferably further comprises a light guiding unit configured for propagating therethrough of all the multiple light components via total internal reflection along spaced-apart parallel trajectories, and directing them along parallel paths towards the partial eyebox.

In some embodiments, the multiplication system is configured as follows: The first multiplicator comprises a successive arrangement of a λ/4 waveplate receiving an input light beam and applying circular polarization producing a circular polarized light beam, a light guiding element comprising at least one polarization-selective interface which splits the circular polarized light beam into its two linear polarization components, and at least one light deflector redirecting the light beam components to propagate along substantially parallel paths towards the light guiding unit. The second multiplicator is located at an entry to the light guiding unit and comprises: a λ/2 waveplate applying 45-degree rotation to each of the linearly polarized light components, thereby producing, from each of said light components, a polarization-mixed light beam; a polarization sensitive interface splitting each of the polarization-mixed light beams into a pair of linearly polarized light components and reflect one polarization component into the light guiding unit and pass the other polarization component into a cavity filled with a medium with a lower refractive index and having reflective inner surfaces to thereby direct said light component, by successive refraction and reflection, into the light guiding unit. By this, a predetermined displacement between parallel propagation paths of all the light components along the light guiding unit is provided.

The pupil multiplicator system preferably comprises an on-axis volume hologram at an output of the light guiding unit. The on-axis volume hologram provides the propagation of the light components along the parallel paths towards the partial eyebox.

In some embodiments, the partial eyebox selector comprises: a support platform carrying a scan unit of said scanner and configured for tilting movement with respect to multiple axes thereby selectively directing a solid-angle light beam, corresponding to the field of view, in different directions; and a lateral displacement assembly configured for transforming said different directions of the solid-angle light beam propagation into different substantially parallel optical paths with lateral shifts between them.

The lateral displacement assembly preferably comprises a volume hologram unit configured with an array of spaced-apart regions of different diffraction patterns, each pattern being configured to transform a predetermined light incidence direction into an output optical path being parallel to output optical path of other of said patterns with the predetermined lateral shift between the output paths. The array of the different diffraction patterns corresponds to a predetermined array of optical windows of the effective eyebox, each corresponding to the partial eyebox.

The projection system of the invention may be used with monocular smart glasses, such that the effective eyebox is incorporated in a lens of the glasses. One or more elements of the pupil multiplicator system (e.g. second multiplicator and light guiding unit) may be incorporated in the lens of the glasses.

### BRIEF DESCRIPTION OF THE DRAWINGS

In order to better understand the subject matter that is disclosed herein and to exemplify how it may be carried out in practice, embodiments will now be described, by way of non-limiting examples only, with reference to the accompanying drawings, in which:
**Fig. 1** is a block diagram of an exemplary image projection system of the present invention.
**Fig. 2** schematically exemplifies some of the principles of the present invention for configuring an effective eyebox defined by the image projection system;
**Figs. 3A to 3C** illustrate schematically a possible configuration of the image projection system (Fig. 3A) and light propagation scheme therein (Figs. 3B-3C);
**Fig. 4** illustrates a possible configuration of the scanner to be used with the image projection system of the invention; and
**Figs. 5A to 5D** exemplify a possible configuration of a partial eyebox selector suitable to be used in the projection system of the invention.

### DETAILED DESCRIPTION OF EMBODIMENTS

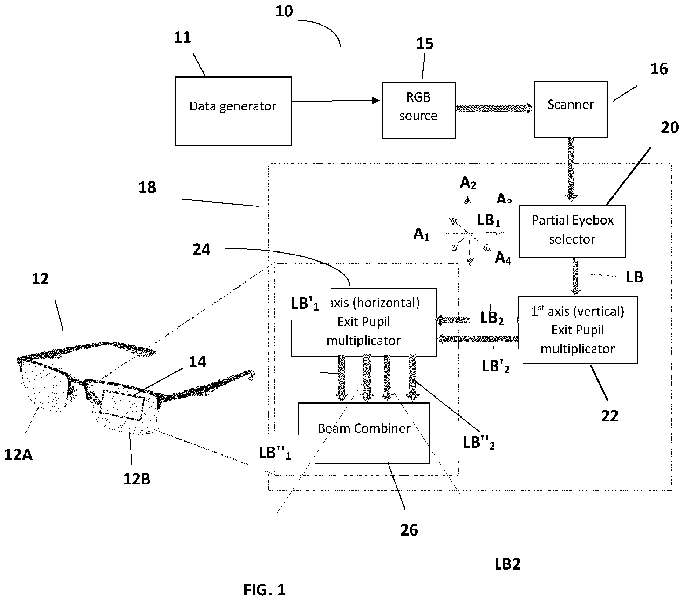

Reference is made to **Fig. 1** showing, by way of a block diagram, an image projection system **10** of the present invention to be used for direct projection of data-encoded images onto user's eye via monocular smart glasses **12.** Either lens **12A** or **12B** of the glasses serves as an effective eyebox **14** defined by the image projection system **10.**

It should be understood that the effective eyebox defined by the projection system which directly projects images in user's eye is to be located at or very close to the eye pupil. For simplicity of illustration, such eyebox is illustrated here within the vision region of the respective lens of the glasses, as if being an eye lens.

As shown in the figure, the image projection system **10** is associated with a data generator **11** and a light source system **15** (e.g. including an RGB source) which produces image encoded light in accordance with data to be presented on the eyebox **14.** The image projection system **10** includes a scanner **16** and an image projector **18.** The scanner **16** receives the image encoded light beam and directs it, while scanning a predetermined field of view (solid angle), towards the image projector **18.**

As will be exemplified further below, in some embodiments, the scanner **16** is configured to provide collimated output at an exit pupil thereof, and thus provide collimated input to the image projector **18.** This may be implemented while utilizing a pair of uniaxial scan units (MEMS) or a single biaxial scan unit. As also will be described further below, the scanner preferably includes first and second scan units and a light directing optics between them, where the first scan unit is located in a non-collimated space of the light directing optics.

The image projector **18** receives collimated image-encoded light beam and transforms the exit pupil of the scanner **16** into multiple duplicates thereof which are presented to user via a selected region (partial eyebox) within the effective eyebox **14** of the image projector **18.** It should be noted that the image projector of the present invention does not utilize optical-powering elements, and it therefore does not implement any imaging effects, but just properly transforms the appearance of exit pupil of the scanner onto the effective eyebox of the projector.

The image projector includes: a partial eyebox selector **20;** and an exit pupil multiplicator system. The latter may include first and second exit pupil multiplicators **22** and **24;** and a combiner (light guiding unit) **26.** The patrial eyebox selector **20** is configured and operable to adjust propagation of the image encoded light (corresponding to the exit pupil of the scanner) towards a selected i-th region *Rᵢ* of the selected i-th partial eyebox, from a predetermined array of *N* regions *Rᵢ...Rₙ,* on the effective eyebox **14** (as will be described further below).

The multiplicators are configured for successively multiplying / replicating the exit pupil of the scanner along two orthogonal axes to thereby create a predetermined matrix (e.g. 2x2 matrix) of the exit pupils in said i-th partial eyebox *Rᵢ*.

The multiplications along first and second axes may in some example be performed sequentially, such that the first-axis (vertical) multiplicator **22** is located downstream of the second-axis (horizontal) multiplicator with respect to the light propagation through the projector. The second-axis multiplicator, as well as the combiner **26,** are incorporated in the respective lens **12A** or **12B** of the glasses.

As shown in the figure, the first multiplicator **22** converts a light beam **LB** coming from the partial eyebox selector **20** (light corresponding to the exit pupil of the scanner) into a first pair of light beam **LB₁** and **LB₂,** and the second multiplicator **24** converts these light beams **LB₁** and **LB₂** into corresponding pairs of light beams **LB₁'-LB₁"** and **LB₂'-LB₂",** respectively.

It should be understood that the system configuration of the invention provides simultaneous appearance of the entire partial eyebox, formed by the array/matrix of the exit pupils (light spots), within the selected region of the effective eyebox **14.**

According to the invention, the effective eyebox **14,** that can be defined by the image projector **18,** is configured in accordance with an array of spaced-apart optical windows defining possible regions for location of one selected partial eyebox representing the exit pupil matrix. Preferably, the effective eyebox **14** is configured to define a 2D array (matrix) of *N*×*M* partially overlapping regions / optical windows.

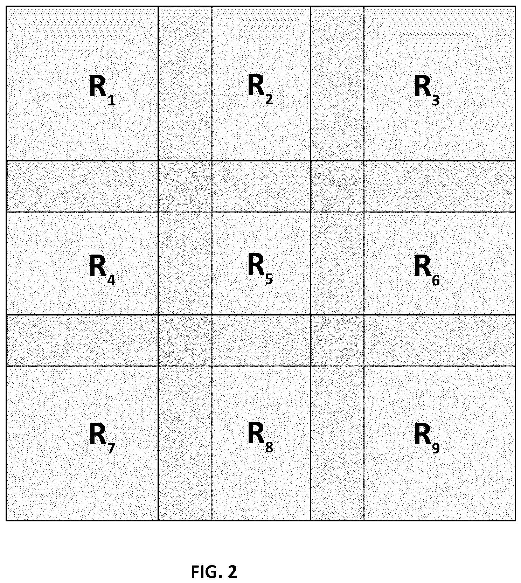

The above is exemplified in **Fig. 2****.** In the present non limiting example, a matrix of 3x3 regions **R₁...R₉** is shown (each for locating therein the user-selected partial eyebox), which might be sufficient for the 10×10mm size of the effective eyebox **14.** The optical window regions are sufficiently overlapping between them to make the glasses suitable for wider population.

As indicated above, the partial eyebox selector **20** performs lateral displacement of a general optical path of propagation of a solid angle of light (i.e. in accordance with a predetermined field of view) to direct it towards the selected i-th partial eyebox region Rᵢ. Generally, this can be implemented by using light deflectors at the output of the scanner.

Preferably, however, the partial eyebox selector **20** includes a manipulatable platform (tilter) carrying thereon a scan unit (e.g. the entire scanner or a part thereof, depending on the scanner configuration, as will be exemplified more specifically further below), and a volume hologram structure downstream of the scan unit, which operate together to implement desired lateral displacement of the exit pupil of the scanner. This will be described more specifically further below.

As shown schematically in **Fig. 1****,** the angular displacement / tilting is provided along fours axes **A₁, A₂, A₃** and **A₄** (vertical, horizontal and 2 diagonal axes providing 8 directions of movement) to enable to attain 3 positions along each axis. This is implemented by mounting the platform for rotation / pivot with respect to the two axes, such that angular displacements of the platform effects tilting of the light beam path to be incident on a different region of volume hologram. The latter is configured such that light beams being incident on different regions of the volume hologram with different angles of incidence interact with different diffraction patterns, all redirecting diffracted light beams along spaced-apart general propagation paths while keeping the constant solid angle of the light beam. The lateral displacement of the light beam path moves it between different regions R₁-R₉ on the effective eyebox **14** enabling selection of user-specific optimal region for the partial eyebox. The volume hologram preferably includes multiple layers corresponding to multiple wavelength ranges of color light components of the light beam.

The partial eyebox selector **20** may be manipulated between 3x3 discrete angular positions on a goniometric or gimbal mems actuator. In order to achieve a total of 9 positions, stacking of multiple (e.g. three) actuators can be used, which may be ferromagnetic actuators (motion of the actuator can be achieved with ferromagnetic motors) or ionic electroactive polymer bending actuators. Generally, the angular displacement of the platform (tilter) may be implemented using any known suitable technique, e.g. utilizing electro-optical and/or magnetic mechanisms.

As described above, the procedure of partial eyebox region selection can be performed once for user-specific session(s) of using the glasses, and upon selection, the selected i-th region Rᵢ for the partial eyebox is maintained to be used during the imaging session(s) of said user.

The exit pupil multiplicators **22, 24** and combiner **26** operate together to multiply/replicate the exit pupil of the scanner to create the predetermined exit pupil matrix (2x2 matrix in the present not limiting example). This will be described further below.

It should be understood that since the technique of the present invention implements multiplication of the exit pupil of the scanner involving only lateral-axes splitting (and no angular displacement) and preferably utilizes collimated output of the scanner, the technique is practically insensitive to relative accommodation of the spots in the exit pupil matrix and the entire exit pupil matrix accommodation within the selected partial eyebox. In other words, location of the spots of the second matrix (spot pattern) with respect to user's line of sight during an imaging session (i.e. a size of a portion of the spot patterned being seen by the user) does not affect user's perception.

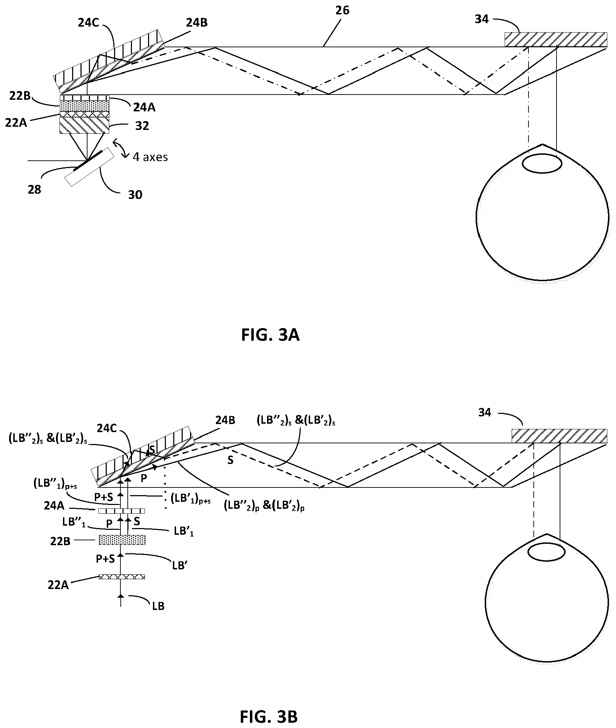

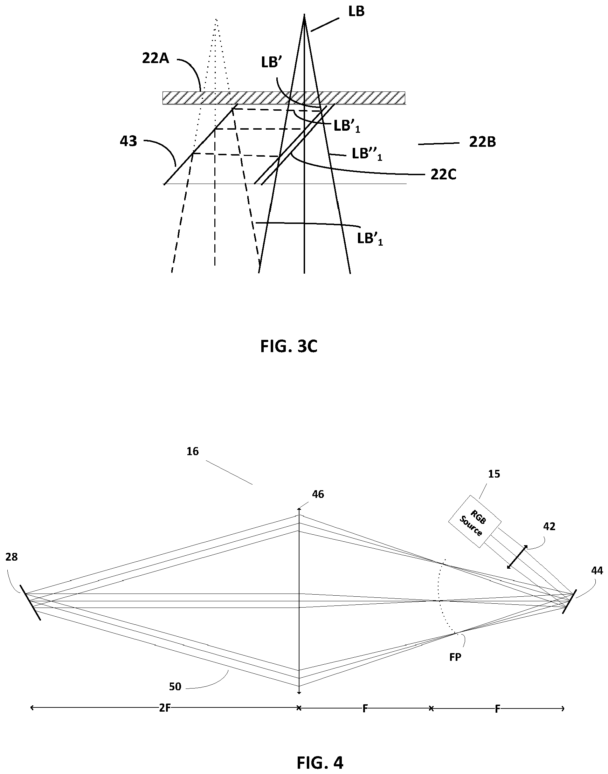

Reference is made to **Figs. 3A to 3C** illustrating schematically the exemplary image projection system **10** (Fig. 3A) and light propagation scheme therein (Figs. 3B-3C). As shown, a scan unit **28** (which may be a second one of two uniaxial scan units used in the scanner, as is described below), being typically of MEMS configuration, is mounted on the manipulating platform **30** (tilter) of the partial eyebox selector **20.** As described above, the partial eyebox selector **20** may further include the volume hologram **32** which is configured to perform lateral displacement of light corresponding to the exit pupil of the scanner (caused by angular displacement of the platform **30**) through predetermined *N* (e.g. 9) positions/regions within the effective eyebox **14,** enabling selection of the optimal i-th region Ri for the partial eyebox.

Light output of the volume hologram **32** is coupled to (passes through) the first-axis (vertical) exit pupil multiplicator **22.** More specifically, the multiplicator 22 includes: successive arrangement of a λ/4 waveplate **22A** which receives input light beam **LB** and applies circular polarization producing s-p circular polarized light beam **LB';** a light guiding element **22B;** and at least one light deflector **22C.**

The light guiding element **22B** includes at least one polarization-selective interface **40** which splits the light beam **LB'** into its 2 linear polarization components *s* and *p*, i.e. light beams **LB'₁** and **LB"₁**). One of these light beams, beam **LB"₁,** is transmitted by the interface **40** and the other beam, beam **LB'₁,** is reflected by interface **40** towards further light deflector(s). The at least one such light deflector **43** (e.g. polarization sensitive or not) redirects the light beam components **LB'₁** to propagate substantially parallel to that of propagation of the light beam component **LB"₁.** It should be understood that depending on the configuration of the light guiding element and light propagation scheme through the projector, each of the light beams **LB'₁** and **LB"₁** undergoes such transmission / reflection / deflection in a single- or multi-paths while propagating through the light guiding element **22B.** Thus, the scanner's exit pupil **LB** is multiplied by factor 2 while propagating through the multiplicator **22A.**

The so-produced paired light beams **LB'₁** and **LB"₁,** corresponding to the 2-multiplied exit pupils, propagate towards the light guiding unit (at times referred to as "combiner") **26,** and interact, at the entry to the combiner **26,** with the second-axis (horizontal) exit pupil multiplier **24.** The second-axis (horizontal) exit pupil multiplier **24** includes a λ/2 waveplate **24A** which applies 45-degree rotation to each of the s- and p-polarization components **LB'₁** and **LB"₁,** thus producing, from each of these components, an (s+p) polarization-mixture: **LB'₁** -> **(LB'₁)ₚ₊ₛ** and **LB"₁** → **(LB"₁)ₚ₊ₛ.**

These polarization-mixture beams **(LB'₁)ₚ₊ₛ** and **(LB"₁)ₚ₊ₛ** interact with a polarization sensitive interface **24B,** which splits each of them into a pair of light components: **(LB'₁)ₚ₊ₛ → (LB'₂)ₚ & (LB'₂)ₛ** and **(LB'^{'}₁)ₚ₊ₛ → (LB"₂)ₚ & (LB"₂)ₛ,** and directs (reflects) light beams **(LB'₂)ₚ** and **(LB"₂)ₚ** into a light guiding unit of the beam combiner **26,** while passing the other light beam components **(LB'₂)ₛ** and **(LB"₂)ₛ** into a cavity **24C** filled with a medium with lower refractive index. Here, the light beam components **(LB'₂)ₛ** and **(LB"₂)ₛ** are properly refracted at the entry of the cavity **24C** and then reflected from an inner surface of the opposite facet of the cavity **24C** back into the beam combiner **26.** The refraction affects a required horizontal displacement of each light components **(LB'₂)ₛ** and **(LB"₂)ₛ** thus providing the laterally displaced second pair of the exit pupils.

All the light components corresponding to / representing multiplied locations of the scanner's exit pupil propagate through the light guiding unit **26** via total internal reflection along spaced-apart parallel trajectories, and then interact with an output on-axis deflector **34,** which directs the exit pupil replicas towards the selected i-th partial eyebox (i.e. enabling presentation of the 2x2 exit pupil matrix).

The on-axis deflector **34** is preferably implemented as a volume hologram on-axis from user's eye, instead of a mirror element. Similarly to the above described volume hologram **32,** the volume hologram **34** may include a Bragg reflector for multiwavelength light (RGB). The use of volume hologram provides for reducing the bulk and improving bidirectional transparency of the combiner to the outside world.

It should be noted that the total lateral size of the volume hologram **34** is preferably about 18 × 18mm in order to allow for ±10° FOV at the extreme pupil positions.

Reference is made to **Fig. 4** which illustrates a possible configuration of the scanner **16.** In this example, the scanner **16** includes successively arranged first and second scan units **44** and **28** with a light directing optics **50** between them, and may be configured to provide collimated light at the exit pupil thereof. In this example, the first and second scan units **44** and **28** are responsible for scanning, respectively, the horizontal and vertical dimensions of the image being projected.

The scanner is exposed to input light generated by a light source unit **15,** which may include a broadband light source or may include multiple light emitters producing multiple wavelengths, respectively. For example, the light source unit **15** is configured to produce collimated light beams of 3 color components (RGB) combined into a single beam by a multiplexer / beam combiner.

Light produced by the light source system **15** is coupled to the scanner **16** by a lens **42.** This lens **42** preferably has a focal length large enough to enable placing the first scan unit **44** before the focal plane **FP** of lens **42.** The scan unit **44** may include a single-axis resonative MEMS mirror responsible for scanning the horizontal dimension of the projected image. Since, in this embodiment, the scan unit **44** is placed in a non-collimated space, an effective focal plane created while scanning is actually presented by a curved surface.

The provision of lens **42** enables to reduce the size (cross-section) of the beam exiting from the light source system **15** to a preferable size e.g. to fit the dimension (diameter) of the first scan unit **44.** To relay the light from the first scan unit **44** onto the second scan unit **28,** the light directing optics **50** includes a lens unit **46** (one or more lenses). The configuration is such as to provide a 4f-type optical relay between the first scan unit **44** and the second scan unit **28.** The scan unit **44** is accommodated at a distance from lens **46** approximately equal to twice the focal length of lens **46.** In addition, the distance of scan unit **44** from the lens **46** is such that the curved surface corresponding to the effective focal plane of lens **42** substantially coincides (as much as possible) with the focal plane of lens **46.**

The above arrangement provides that the light beams exiting from lens **46** are collimated and the first scan unit **44** is relayed on second scan unit **28** creating thereby the exit pupil of the scanner **16** on scan unit **28.** Also, in this embodiment an effective 1:1 magnification is achieved between the beam size (diameter) on the first scan unit **44** and the corresponding beam size (diameter) of the exit pupil on the second scan unit **28.**

It should be noted that, generally, in some other embodiments, a magnification different from 1: 1 may be achieved by changing the focal length of lens **42** while varying the distance between scan unit **44** and lens **46** so that effective focal plane of lens **42** substantially coincides (as much as possible) with the focal plane of lens **46** if collimated beams are required at the exit from lens **46.**

Yet in other embodiments of scanner **16,** a single 2D scan unit may replace the two scan units **44** and **28.**

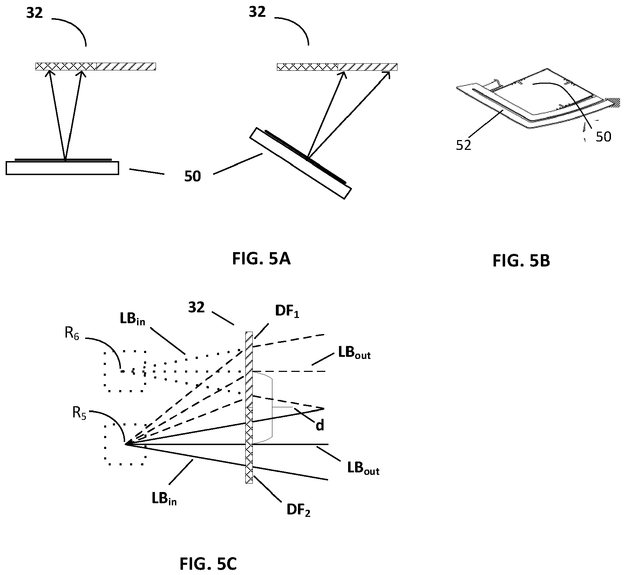

Reference is made to **Figs. 5A to 5D** exemplifying a possible embodiment of the configuration suitable for use in the partial eyebox selector **20.** The partial eyebox selector **20** includes a rotatable/pivotal platform **50** carrying thereon the scan unit **28** which directs light beam **LB** onto the volume hologram **32.** **Fig. 5A** shows two different angular positions of the platform **50** required for selectively directing the light beam onto a different region of the volume hologram to be laterally displaced pointing on a different region of the effective eyebox (**14** in Fig. 1), as described above. Such angular tilt of the platform can be achieved by any suitable technical configuration, for example by mounting the platform on a suitable electro-optical or magnetic (ferromagnetic) actuator, as exemplified **52** (**Fig. 5B**).

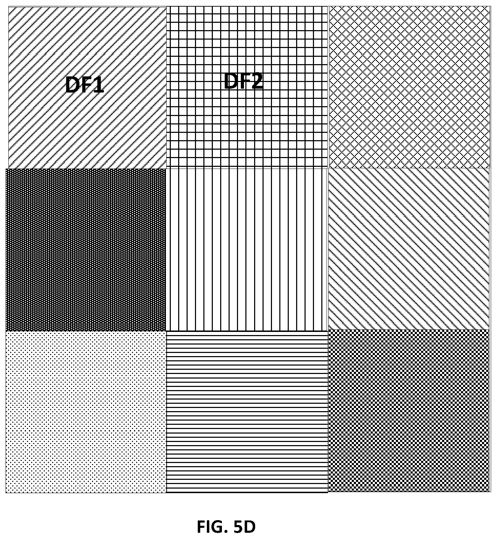

**Fig. 5C** exemplifies the structure of the volume hologram **32** configured for the purposes of the present invention. The volume hologram is designed from a 9x9 (generally NxM) matrix of different diffractive patterns **DF₁...DF₉** (generally DF¹₁...DFⁿₘ). Each ij-th diffractive pattern is configured such that it diffracts an input solid-angle light beam having a predetermined oblique incidence on said diffractive pattern in an output light beam directed substantially parallel to outputs of the other patterns while maintaining the constant solid angle of the light beam. As shown more specifically in **Fig. 5D****,** with respect to the 2 adjacent diffractive patterns **DF₁** and **DF₂,** solid-angle light beam **LBᵢₙ** is sequentially incident on these patterns (while tilting the platform for the purposes to select the user specific optimal region for the partial eyebox) with different angles of incidence shown by solid and dashed lines. Owing to the proper configuration of the diffraction patterns **DF₁** and **DF₂,** in both cases the diffracted outputs **LBₒᵤₜ** are substantially parallel with a predetermined lateral shift ***d*** between them.

Thus, the present invention provides an effective and relatively simple solution for monocular smart glasses, providing required conformity for the user while enabling high-quality imaging.

## Claims

1. A projection system for use in direct projection of images onto user's eye, the projection system comprising:
a scanner operable for scanning a predetermined field of view with an image encoded light beam, an exit pupil of the scanner defining an exit pupil of the projection system; and
an image projector configured to define an effective eyebox of predetermined dimensions, the image projector being configured and operable to transform the exit pupil of the scanner into an array of *N* said exit pupils being simultaneously projected on a user-selected partial eyebox being a region of the effective eyebox.

2. The projection system according to claim 1, wherein the image projector is configured to define said effective eyebox configured to contain a predetermined array of optical windows each configured to operate as the user-selected partial eyebox for simultaneous appearance therein of said array of *N* exit pupils.

3. The projection system according to claim 1 or 2, wherein the scanner comprises successively arranged first and second scan units and light directing optics between them, wherein, the first scan unit is located in a non-collimated space of the light directing optics.

4. The projection system according to any one of the preceding claims, wherein the image projector comprises a partial eyebox selector configured for displacing a path of the exit pupil projection towards different regions of the effective eyebox to thereby enable to identify the user-selected region to be used in one or more imaging sessions.

5. The projection system according to any one of the preceding claims, wherein the image projector comprises a pupil multiplicator system comprising at least first and second multiplicators configured for successively multiplying the exit pupil along at least first and second axes to thereby create an NxM matrix of the exit pupils to be projected onto said selected partial eyebox.

6. The projection system according to claim 5, wherein each of said at least first and second multiplicators is configured for polarization-selective splitting and combining of light beams to thereby produce multiple light components, each corresponding to a replica of said exit pupil.

7. The projection system according to claim 5 or 6, wherein the pupil multiplicator system comprises a light guiding unit configured for propagating therethrough said multiple light components via total internal reflection along spaced-apart parallel trajectories, and directing them along parallel paths towards the partial eyebox.

8. The projection system according to claim 7, wherein:
the first multiplicator comprises a successive arrangement of a λ/4 waveplate receiving an input light beam and applying circular polarization producing a circular polarized light beam, a light guiding element comprising at least one polarization-selective interface which splits the circular polarized light beam into its two linear polarization components, and at least one light deflector redirecting the light beam components to propagate along substantially parallel paths towards the light guiding unit;
the second multiplicator is located at an entry to the light guiding unit and comprises: a λ/2 waveplate applying 45-degree rotation to each of the linearly polarized light components, thereby producing, from each of said light components, a polarization mixed light beam; a polarization sensitive interface splitting each of the polarization mixed light beam into a pair of linearly polarized light components and reflect one polarization into the light guiding unit and pass the polarization into a cavity filled with a medium with a lower refractive index and reflective inner surfaces to thereby direct light, by successive refraction and reflection into the light guiding unit, causing a predetermined displacement between parallel propagation paths of all the light components along the light guiding unit.

9. The projection system according to claim 7 or 8, wherein said pupil multiplicator system comprises an on-axis volume hologram at an output of the light guiding unit, said on-axis volume hologram providing said propagation of the light components along said parallel paths towards the partial eyebox.

10. The projection system according to any one of claims 4 to 9 wherein the partial eyebox selector comprises: a support platform carrying a scan unit of said scanner and configured for tilting movement with respect to multiple axes thereby selectively directing a propagation path of a solid-angle light beam, corresponding to the field of view, in different directions; and a lateral displacement assembly configured for transforming said different directions of the propagation path into different substantially parallel optical paths with lateral shifts between them.

11. The projection system according to claim 10, wherein said lateral displacement assembly comprises a volume hologram unit configured with an array of spaced-apart regions of different diffraction patterns, each pattern being configured to transform a predetermined light incidence direction into an output optical path being parallel to output optical path of other of said patterns with the predetermined lateral shift between the output optical paths.

12. The projection system according to claim 11, wherein said array of the different diffraction patterns corresponds to a predetermined array of optical windows of the effective eyebox, each corresponding to the partial eyebox.

13. The projection system according to any one of the preceding claims, wherein said effective eyebox is incorporated in a lens of glasses.

14. The projection system according to any one of claims 5 to 13, wherein one or more elements of the pupil multiplicator system is incorporated in said lens of the glasses.

15. An image projection method for direct projection of images onto user's eye, the method comprising:
while scanning a predetermined field of view with an image encoded light beam, creating an image related exit pupil of a desired dimension; and
transforming the exit pupil onto a region of an effective eyebox, wherein said transforming comprises replicating the exit pupil with a predetermined factor to thereby provide simultaneous appearance of an array of exit pupil replicas within said region of the effective eyebox.

16. The method of claim 15, further comprising selecting said region to serve as a user-specific partial eyebox.

17. The method of claim 16, wherein said selecting comprising, while transforming, controllably displacing the exit pupil along said effective eyebox towards an user-specific optimal region.
